# EUROPEAN PATENT APPLICATION

(11) **EP 4 464 473 A1**
(43) Date of publication of application: **20.11.2024**
(21) Application number: 24174631.2
(22) Date of filing: 07.05.2024
(51) Int. Cl.: B25J 15/06, B25J 15/00

(54) **ROBOTIC PICKING APPARATUS AND METHOD FOR OPERATING THE SAME**

(30) Priority: 07.05.2023 US 202363464608 P; 06.05.2024 US 202418656410
(71) Applicant: Plus One Robotics, Inc., San Antonio, TX 78226 (US)
(72) Inventor: CHURCHILL, Matthew Henry, San Antonio, TX 78226 (US); KIRK, Wayne M., San Antonio, TX 78226 (US); BENNETT, Zachary, San Antonio, TX 78226 (US); SANDOVAL, Ivy Vasquez, San Antonio, TX 78226 (US)
(74) Representative: Savi, Massimiliano

(57) **Abstract**

A gripping system for grabbing and releasing an object using a robotic arm includes a gripper body for operably engaging the robotic arm. The gripper body includes a vacuum pathway, a vacuum source connector operably coupled to the vacuum pathway, and a compressed air source connector. A plurality of compensators are configured to extend and retract relative to the gripper body. Each one of the compensators is configured for being placed in communication with the vacuum pathway when the compensator is in the extended position and for being isolated from the vacuum pathway when the compensator is in the retracted position.

## Description

### CROSS-REFERENCE TO RELATED APPLICATIONS

This Application claims priority to U.S. Provisional Patent Application No. 63/464,608 filed on May 7, 2023, entitled "Robotic Picking Apparatus And Method For Operating The Same," the contents of which are incorporated herein by reference.

### BACKGROUND

Robotic systems with vacuum gripping engaging structures for grabbing, holding, sorting and moving objects are known. For example, U.S. Patent No. 6,015,174, the disclosure of which is hereby incorporated by reference, discloses a universal end effector system applied to a robot that positions pliable "bellows," which are more commonly known as vacuum cups, that compress and seal against the surface of an object to be moved. The system applies a pneumatic vacuum pressure within the sealed area of the bellows secured to the end effector of the object, thereby allowing the robot to lift and move the object. The system includes a control system with sensors and the like that allows the vacuum to be engaged and released on demand, and/or based on predetermined sensed criteria, to allow objects gripped by the end effector to be grabbed, moved, and released by the robot as desired. Efforts to improve on this basic vacuum gripping system have included adding additional gripping technology to the working end of the gripper. For example, U.S. Patent No. 7,963,578, the disclosure of which is hereby incorporated by reference, teaches using an electro-magnet in the gripper that works alone or in tandem with the pneumatic vacuum gripping system.

Currently available grippers, however, have some significant drawbacks that make the grippers less desirable and potentially unusable in certain scenarios. Generally, an array of suction cups is needed to pick objects of a variety of different masses, shapes, and sizes. However, in order to effectively pick various objects and create an effective seal between the suction cups and the object, it is desirable to apply an even amount of pressure across all of the suction cups. But it is often difficult to do so when the objects are malleable or compliant and/or have a significant amount of contour to them relative to the arrangement of the suction cups in an array. In these scenarios, currently available gripper systems will tend to fail because they are unable to apply even pressure across the suction cup array. As such, currently available gripper systems are unreliable especially when deployed in the situations described above (i.e., when picking highly contoured objects and/or compliant objects), especially in large scale, fast moving industrial systems.

Some have tried to overcome this limitation by applying excessive top-down force on the object via the gripper to compress the object (thereby somewhat straightening or smoothing some of the contoured surfaces) in an effort to form an effective seal between the objects and all of the suction cups within an array of suction cups. However, this approach introduces new limitations and/or problems. For example, an excessive amount of force may break or damage the object that the gripper is trying to pick. In other scenarios, the excessive pressure may break or damage the work cell or a conveyor belt that houses the object and/or may damage the robotic arm and/or the robotic end effector. For example, in some of these scenarios, the robot end effector effectively collides with the object, which causes an over amp in some of the motors, which may put the entire work cell down because the robot has effectively crashed.

This problem is exacerbated when the pick point selection system is not accurate. Certain pick point selection systems are not able to identify a pick location with sufficient accuracy. For example, an error of three inches along the vertical or gravitational axis of a pick point may cause the end effector to overshoot by, for example, compressing the object three inches in a first instance. Moreover, the excessive top-down force strategy may cause the object to compress an additional three inches for a total of six inches. This additional pressure may cause certain work cells and/or the robotic systems to break down as described above.

Others have tried to overcome these limitations by using a spring based pogo system. However, these spring-based pogo systems have hoses routed externally that enable negative pressure to be applied to the suction cups. These systems suffer from a variety of issues that may make them undesirable or unusable in certain circumstances. For example, the externally routed hoses snag on things, which adds to maintenance costs. Moreover, the externally routed hoses add stiffness to the entire structure, which make them difficult to use. In addition, these systems further exacerbate the problems discussed above by the physical limitations associated with currently available gripper systems. Currently available gripper systems, for example, provide vacuum pressure to the vacuum cups through external hoses extending from the base frame to the vacuum cups. The hoses are intended to be flexible so as not to interfere with the movement of the robot arm or a portion thereof. In practice, however, the hose material and thickness, combined with the pressure built up within it, cause the hose to resist motion during use. This resistance may cause further inaccuracy and may compress packages more than desired especially if the excessive downward force strategy is applied.

### SUMMARY

The present invention overcomes these limitations by introducing elements in the robotic end effector that enable the robotic picking system to efficiently pick items. In other words, the elements of the robotic end effector that are disclosed herein enable the robotic end effector to pick items without applying significant additional pressure on an object, while at the same time improving the likelihood that even pressure is applied across all of the vacuum cups in an array when picking highly contoured objects and/or compliant objects.

More specifically, the present invention includes hardware and software to enable activation of a multi-cup suction gripper on a per-cup basis in a more robust and compact fashion. Previous multi-cup grippers use a fixed number of predetermined zones to enable flexibility of grasping area. Additionally, previous per-cup activation paradigms required bulky external air routing. The present invention places the vacuum control into the gripper system to reduce cost and bulk. To achieve this, the gripper system integrates a pneumatic driven cylinder into the gripper itself for each suction cup.

In one embodiment, the invention is directed to a gripping system for grabbing and releasing an object using a robotic arm. The gripping system includes a gripper body for operably engaging the robotic arm. The gripper body comprises a vacuum pathway, a vacuum source connector operably coupled to the vacuum pathway, and a compressed air source connector. The gripping system further includes a plurality of compensators configured to extend and retract relative to the gripper body. Each compensator has an extended position and a retracted position defining a range of motion therebetween. Each compensator includes a cylinder having a distal end and a proximal end, a piston configured for reciprocal linear translation within the cylinder, a piston rod having a proximal end attached to the piston and a distal portion protruding out of the distal end of the cylinder, and a vacuum chamber surrounding the cylinder and having a distal portion fixedly coupled to the distal portion of the piston rod. The vacuum chamber is configured for being placed in communication with the vacuum pathway when the compensator is in the extended position and for being isolated from the vacuum pathway when the compensator is in the retracted position. The gripping system further includes a respective plurality of compressed air lines coupled to the compressed air source connector, wherein each one of the compressed air lines is operably coupled to a respective one of the compensators. Each one of the compressed air lines may be coupled to a compressed air port on the proximal end of the cylinder of a respective one of the compensators.

Each one of the compensators may include a spring disposed within the cylinder, wherein the spring is at rest when the compensator is in the retracted position and is compressed when the compensator is in the extended position. The spring may be a compression spring that surrounds the piston rod, wherein the compression spring is configured to have an extended configuration at rest and a compressed configuration when the compensator is in the extended position. Each compensator may further include a vacuum port in a sidewall of the vacuum chamber. The vacuum port may be in fluid communication with a vacuum area at a distal end of the vacuum chamber. The vacuum port may further be in fluid communication with the vacuum pathway when the compensator is in the extended position. Each compensator may further include a plurality of vacuum ports disposed radially around a sidewall of the vacuum chamber.

In one embodiment, the compensators use a single-acting, spring-return pneumatic cylinder arrangement, where a compression spring gets compressed in the extended position. An "air spring" may be used to extend the cylinder, and the compressed air pressure is adjusted to achieve a nearly neutrally buoyant extended configuration. This enables a low force when engaging with a parcel, allowing the tool to conform to the contour of the grasped surface. A variable regulator may be used on the compressed air supply to stiffen the tool during parcel transfer.

In one embodiment, each compensator in the gripping system further comprises a vacuum port located in a sidewall of the vacuum chamber. The vacuum port is in fluid communication with a vacuum area at the distal end of the vacuum chamber, allowing for the creation of a suction force when the compensator is extended. A feature of this design is that the vacuum port is in fluid communication with the vacuum pathway in a plurality of positions of the compensator, except for the fully retracted position. This innovative arrangement ensures that the vacuum is only disconnected when the compensator is in a proximal portion of the travel path. For example, in an embodiment where the distance between the retracted position and the extended position of the compensator is 40 mm, the vacuum port may be isolated from the vacuum pathway during the first 10 mm of travel from the retracted position to the extended position and may be in communication with the vacuum pathway for the remaining 30 mm of travel.

The use of the extension axis to engage with the vacuum supply is one of the novel aspects of this gripping system. By integrating the extension mechanism with the valving mechanism, the overall construction of the device is optimized for minimal height and weight. This approach stands in contrast to alternative methods that separate the extension and valving mechanisms, which would result in a taller and heavier tool.

The benefits of this design are evident when compared to legacy gripper products and competitive products on the market. By leveraging the extension axis for vacuum engagement, the present gripping system achieves a more compact design while accommodating a greater number of suction cups. This increased number of suction cups directly translates to enhanced retention force, ensuring a secure grip on the objects being handled.

The integration of the vacuum port with the compensator's extension axis, combined with the strategic positioning of the vacuum pathway engagement, results in a highly efficient, compact, and lightweight gripping system, which outperforms prior art gripping systems.

The piston rod and/or the vacuum chamber may have a distal end that is configured to be coupled to a vacuum cup. The vacuum cup may be configured for operably engaging a surface of an object and forming a pneumatic seal on the surface.

In another embodiment, the invention is directed to a compensator configured to be attached to a gripper body of a gripping system for grabbing and releasing an object using a robotic arm. The compensator includes a cylinder having a distal end and a proximal end, a piston configured for reciprocal linear translation within the cylinder, a piston rod having a proximal end attached to the piston and a distal portion protruding out of the distal end of the cylinder, and a vacuum chamber surrounding the cylinder and having a distal portion fixedly coupled to the distal portion of the piston rod. The vacuum chamber has a vacuum port in a sidewall of thereof. The vacuum port may be in fluid communication with a vacuum area at a distal end of the vacuum chamber. There may be a plurality of vacuum ports disposed radially around a sidewall of the vacuum chamber.

The compensator has a retracted position when the piston is in a proximal position and an extended position when the piston is in a distal position. The compensator may further include a spring disposed within the cylinder. The spring may be a compression spring that surrounds the piston rod. The compression spring may be configured to have a stretched configuration at rest and a compressed configuration when the compensator is in the extended position. The piston rod and/or the vacuum chamber may have a distal end that is configured to be coupled to a vacuum cup. The vacuum cup may be configured for operably engaging a surface of an object and forming a pneumatic seal on the surface.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
**FIGS. 1A-1G** are various views of a robotic system having a vacuum gripping system with independently-actuable vacuum grippers, in accordance with an embodiment of the invention.
**FIG. 2** is a schematic diagram of an alternative vacuum gripper.
**FIGS. 3A** **and** **3B** illustrate an exemplary system for robot picking environment and an exemplary vision system in accordance with an exemplary embodiment of the invention.
**FIG. 4** illustrates an exemplary process for providing observational support according to one embodiment of the invention.
**FIG. 5** illustrates one embodiment of the computing architecture that supports an embodiment of the inventive disclosure.
**FIG. 6** illustrates components of a system architecture that supports an embodiment of the inventive disclosure.
**FIG. 7** illustrates components of a computing device that supports an embodiment of the inventive disclosure.
**FIG. 8** illustrates components of a computing device that supports an embodiment of the inventive disclosure.

### DETAILED DESCRIPTION

One or more different embodiments can be described in the present application. Further, for one or more of the embodiments described herein, numerous alternative arrangements can be described; it should be appreciated that these are presented for illustrative purposes only and are not limiting of the embodiments contained herein or the claims presented herein in any way. One or more of the arrangements can be widely applicable to numerous embodiments, as can be readily apparent from the disclosure. In general, arrangements are described in sufficient detail to enable those skilled in the art to practice one or more of the embodiments, and it should be appreciated that other arrangements can be utilized and that structural, logical, software, electrical and other changes can be made without departing from the scope of the embodiments. Particular features of one or more of the embodiments described herein can be described with reference to one or more particular embodiments or figures that form a part of the present disclosure, and in which are shown, by way of illustration, specific arrangements of one or more of the aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements.

Headings of sections provided in this patent application and the title of this patent application are for convenience only and are not to be taken as limiting the disclosure in any way.

Devices that are in communication with each other need not be in continuous communication with each other, unless expressly specified otherwise. In addition, devices that are in communication with each other can communicate directly or indirectly through one or more communication means or intermediaries, logical or physical.

A description of an aspect with several components in communication with each other does not imply that all such components are required. To the contrary, a variety of optional components can be described to illustrate a wide variety of possible embodiments and in order to more fully illustrate one or more embodiments. Similarly, although process steps, method steps, algorithms or the like can be described in a sequential order, such processes, methods and algorithms can generally be configured to work in alternate orders, unless specifically stated to the contrary. In other words, any sequence or order of steps that can be described in this patent application does not, in and of itself, indicate a requirement that the steps be performed in that order. The steps of described processes can be performed in any order practical. Further, some steps can be performed simultaneously despite being described or implied as occurring nonsimultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they can only occur once each time a process, method, or algorithm is carried out or executed. Some steps can be omitted in some embodiments or some occurrences, or some steps can be executed more than once in a given aspect or occurrence.

When a single device or article is described herein, it will be readily apparent that more than one device or article can be used in place of a single device or article. Similarly, where more than one device or article is described herein, it will be readily apparent that a single device or article can be used in place of the more than one device or article.

The functionality or the features of a device can be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments can include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions can be executed out of order from that shown or discussed, including substantially concurrently or in reverse order, depending on the functionality involved, as would be understood by those having ordinary skill in the art.

The detailed description set forth herein in connection with the appended drawings is intended as a description of various configurations and is not intended to represent the only configurations in which the concepts described herein can be practiced. The detailed description includes specific details for the purpose of providing a thorough understanding of various concepts. However, it will be apparent to those skilled in the art that these concepts can be practiced without these specific details. In some instances, well-known structures and components are shown in block diagram form in order to avoid obscuring such concepts.

### Robot Picking Apparatus

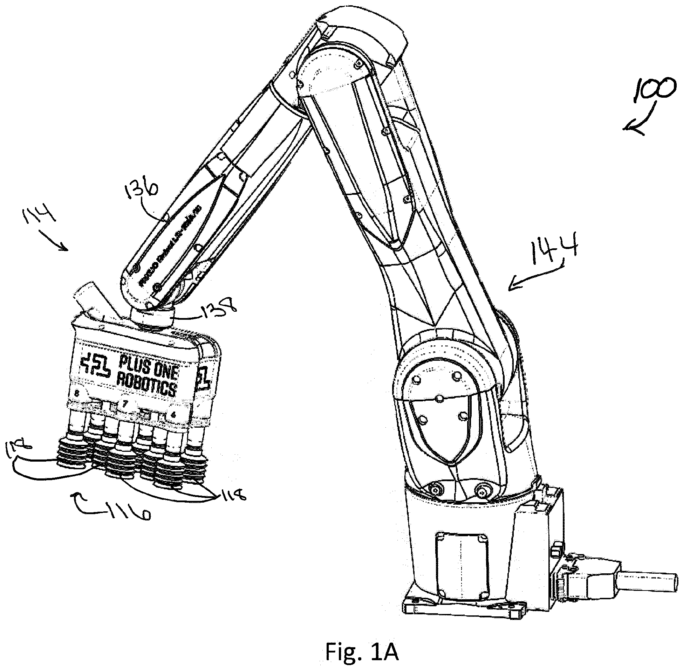

FIG. 1A depicts a robot picking apparatus 100. The robot picking apparatus 100 includes a pneumatic vacuum gripping system 114 having a gripper body 116 that houses multiple vacuum grippers 118. The vacuum grippers 118 may also be referred to herein as compensators 118. The vacuum grippers 118 are each independently actuatable to extend from the gripper body 116 and engage with an object to be picked. The vacuum gripping system 114 is coupled to a base 136 by a member 138. The pneumatic vacuum gripping system 114 may be operably connected to a robotic arm 144 or the like that moves and positions the pneumatic vacuum gripping system 114. The robotic arm 144 may include servos, sensors, cameras, a pneumatic supply and related systems that allow it to locate and position one or more vacuum grippers 118 of the pneumatic vacuum gripping system 114 to engage an object (not shown).

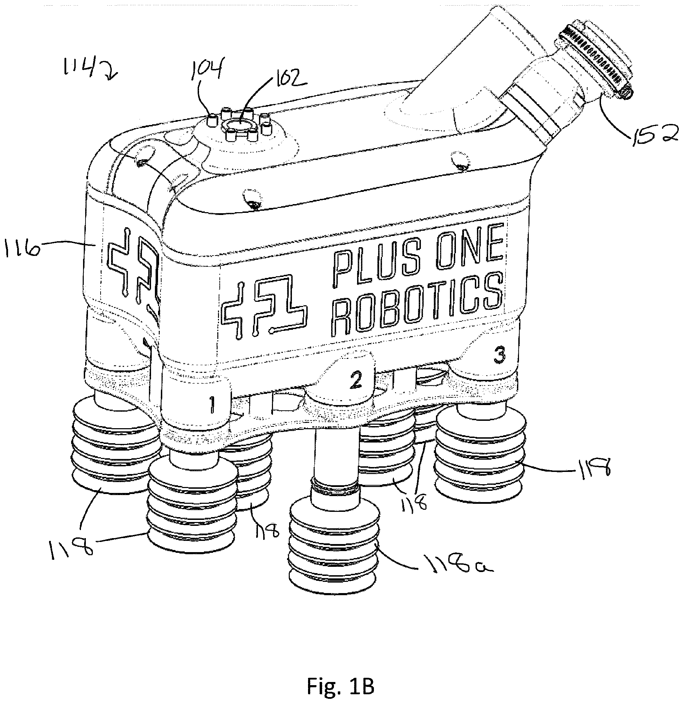

As illustrated in FIG. 1B, the vacuum grippers 118 extend from the gripper body 116. For example, the gripping system 114 can include eight vacuum grippers 118. However, the system 114 is not limited to eight vacuum grippers, and may include any desired number of vacuum grippers. The vacuum grippers 118 are configured to actuate independently of each other, as discussed in greater detail below. Each vacuum gripper 118 travels between an extended position and a retracted position. Fig. 1B shows one of the vacuum grippers 118a in the extended position. The other vacuum grippers 118 are in the retracted position.

The top of the gripper body 116 includes a vacuum source connector that includes an aperture 102 through which vacuum is supplied to the vacuum gripping system 114 and connectors 104 for connecting the gripper body 116 to a wrist of the robot arm 144. Alternatively, vacuum may be supplied through a dedicated vacuum port that is separate from the robot arm connector 104.

The top of the gripper body 116 further includes a connector 152 for connecting to a flex conduit through which compressed air is supplied. The flex conduit is flexible enough to move with the robot motion.

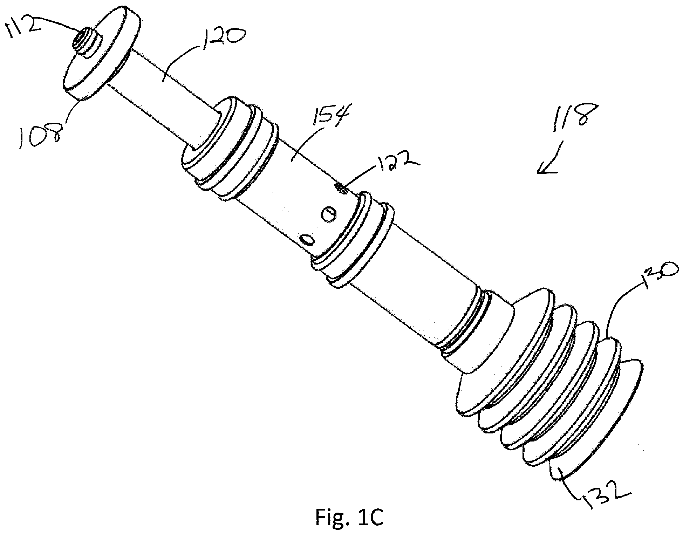

The compensator assembly 118 is discussed in more detail with reference to FIG. 1C. Each compensator assembly 118 includes a proximal end 108, a gas cylinder 120, a vacuum chamber 154 surrounding the gas cylinder 120, and a suction cup 130. The proximal end 108 couples the compensator assembly 118 to the gripper body 116 and includes a gas port 112 for supplying compressed air to the gas cylinder 120. The suction cup 130 includes a flexible shroud 132 that extends downward. When vacuum is applied through the aperture 102 and a vacuum pathway inside the gripper body 116, a vacuum area is created inside the shroud 132 when the vacuum chamber 154 is coupled to the vacuum pathway. The suction cup 130 is a repairable and/or replaceable part. Therefore, the compensator assembly 118 may be supplied without the suction cup 130. Further, the entire compensator assembly 118 may be replaced if it gets damaged or broken.

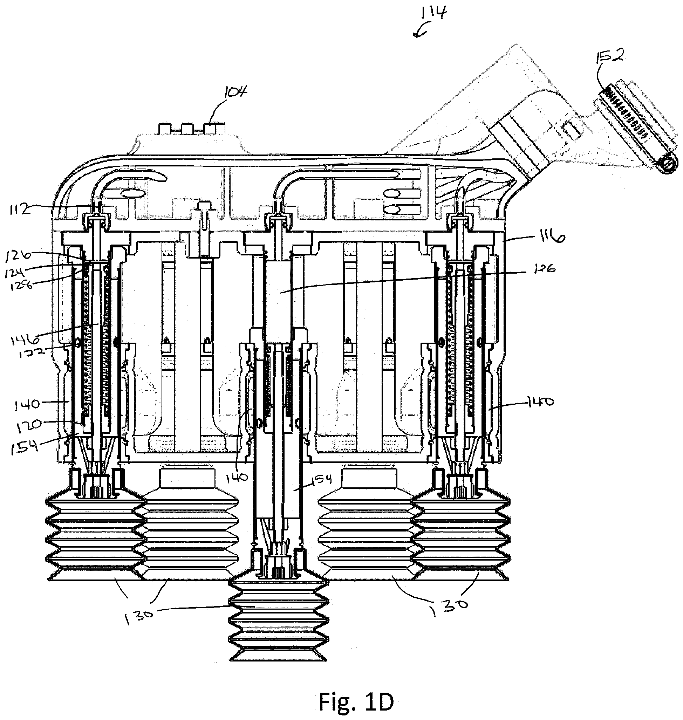

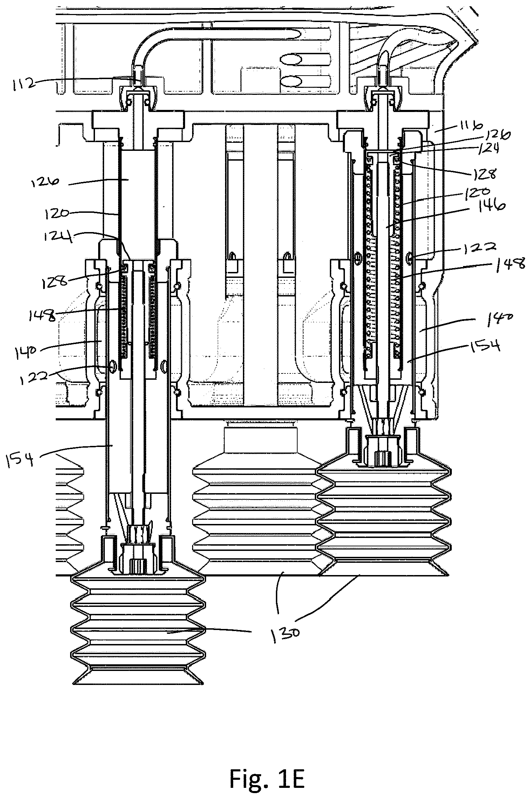

The mechanism for actuating the compensators 118 will be discussed in more detail with reference to Figs. 1D and 1E. The compensator actuation mechanism is similar to a single-acting, push-type pneumatic cylinder. Each compensator 118 includes a piston 124 configured to translate linearly within the cylinder 120, a piston rod 146 fixedly attached to the piston 124, and a vacuum chamber 154 surrounding the cylinder 120. The piston rod 146 passes through an opening in the distal end of the cylinder 120. Each cylinder 120 includes an expansion volume 126 located proximally of the piston 124, and a seal 128 between the piston 124 and the inner walls of the cylinder 120. The expansion volume 126 is coupled to the gas port 112 and receives compressed air once the gas port 112 is activated. When the gas port 112 is activated, compressed air fills the expansion volume 126 causing the pressure in the expansion volume 126 to rise. In response, the piston 124 is forced downward. The suction cup 130 is coupled to a distal end of the piston rod 146 and/or to the distal end of the vacuum chamber 154. As such, when the piston 124 moves distally, the suction cup 130 extends from the gripper body 116.

The gas port 112 at the proximal end of each one of the compensators 118 is independently controllable. Accordingly, each of the compensators 118 can be actuated independently thereby allowing the system to select which one(s) of the suction cups 130 to be extended. The gas ports 112 are individually controlled by off-arm compressed air valves. A pneumatic manifold in communication with a controller activates the desired gas ports as directed by the controller.

Each compensator 118 further includes a spring disposed inside of the cylinder 120. In the example shown in Figs. 1D and 1E, the spring 148 is a compression spring. The compression spring 148 surrounds the piston rod 146 and is positioned between the piston 124 and the distal end of the cylinder 120. As the piston 124 is forced to move distally within the cylinder 120 due to compressed air being introduced into the expansion volume 126, the spring 148 is compressed. When the flow of compressed air is turned off and the cylinder 120 is vented, the spring 148 returns to its expanded resting configuration, thereby forcing the piston 124 to move proximally within the cylinder 120. In this manner, the compensator 118 moves from the retracted position to the extended position by introducing compressed air into the cylinder 120. The compensator 118 moves from the extended position to the retracted position by stopping the flow of compressed air and venting the compressed air out of the cylinder 120.

In one embodiment, the gas cylinder 120 may also operate as a gas spring when engaging with an object to be picked. As illustrated, the extension "air spring" enables adjustment of compensation force with a pressure regulator to accommodate variable product mixes. A variety of inputs may be used to adjust the compensation force. For example, the compensation force may be adjusted based on a package type that is detected by the vision system or set at or during runtime. Additionally, the compensation force may be adjusted to operate the gripper in a first compliant mode for grasp cycle (to protect packages from deformation), and a second increased pressure mode during a transfer cycle to reduce parcel sway during lateral acceleration. In other embodiments, the compensation force may be adjusted based on feedback from a classifier or a human-in-the-loop operator.

One of ordinary skill in the art would understand that the gripping system 114 is not limited to the actuator mechanism described above, and that other actuator mechanisms may be used to extend and retract the compensators 118. In one alternative example, the cylinder 120 may include an extension spring rather than a compression spring, wherein the extension spring is positioned in the expandable volume portion 126 of the cylinder 120 and is configured to pull the piston 124 back to the retracted position after the compressed air supply is turned off.

The compensator actuation also acts as a vacuum valve - the gripper vacuum chamber 154 is disconnected from the supply port in the retracted position and engaged in the initial extension. This configuration enables localized valving to the gripper (as opposed to remote valving of prior art systems, which require much more complex utility management down the robot arm).

In particular, the vacuum chamber 154 is attached to the piston rod 146 so that the vacuum chamber 154 moves distally and proximally with the piston rod 146. The vacuum chamber 154 includes one or more vacuum ports 122 in the sidewall thereof. When the vacuum chamber 154 is in the extended position, the vacuum ports 122 are in communication with a vacuum pathway in the gripper body 116. When the vacuum chamber 154 is in the retracted position, the vacuum ports 122 are isolated from the vacuum pathway. In one embodiment, the vacuum ports 122 are isolated from the vacuum pathway when the compensator is in the proximal-most portion of the travel pathway. That is, the vacuum ports 122 are isolated from the vacuum pathway during the first portion of travel from the retracted position to the extended position and then the vacuum ports 122 are in fluid communication with the vacuum pathway during the second portion of travel from the retracted position to the extended position. For example, if the compensator is configured to travel a total of 40 mm between the retracted position and the extended position, the vacuum ports 122 may be isolated from the vacuum pathway during the first 10 mm of travel from the retracted position towards the extended position. In this example, the vacuum ports 122 may be in fluid communication with the vacuum pathway during the remaining 30 mm of travel.

As illustrated in Figs. 1D and 1E, the gripper body 116 includes multiple vacuum pathways 140. The vacuum pathways 140 are coupled to and in fluid communication with the vacuum supply line that is attached to the aperture 102. In operation, vacuum is created in the vacuum pathway 140 when the vacuum supply line is activated. The vacuum pathway 140 is isolated from the suction cup 130 when the piston 146 (and thus the vacuum chamber 154) is in the retracted position. To achieve this, the vacuum ports 122 in the sidewall of the vacuum chamber 154 are in fluid communication with a suction area inside the suction cup 130. When the piston 124 is in the retracted position, the vacuum port 122 is not in fluid communication with the vacuum pathway 140. As the piston 124 moves distally towards the extended position, the vacuum port 122 aligns with the vacuum pathway 140 thereby placing the suction area of the suction cup 130 in fluid communication with the vacuum pathway 140. The vacuum chamber 154 may include several vacuum ports 122 arranged radially around the sidewall of the vacuum chamber 154. Having multiple vacuum ports 122 enables a higher vacuum flow rate to reach the suction area inside the suction cups 130.

In one embodiment, each compensator includes a vacuum port 122 in the sidewall of the vacuum chamber 154, which is in fluid communication with a vacuum area at the distal end of the vacuum chamber 154. The vacuum port 122 is in fluid communication with the vacuum pathway 140 in a plurality of positions, except for the retracted position. More specifically, the vacuum port 122 is in fluid communication with the vacuum pathway 140 in all positions except for the retracted position.

In one example, as discussed above, the vacuum port 122 is in fluid communication with the vacuum pathway 140 in all positions except for the first 10 mm of travel extending between the retracted position and the extended position.

As the piston 124 moves distally from the retracted position towards the extended position, the vacuum port 122 aligns with the vacuum pathway 140, thereby placing the suction area of the suction cup 130 in fluid communication with the vacuum pathway 140. The vacuum chamber 154 may include several vacuum ports 122 arranged radially around the sidewall of the vacuum chamber 154. Having multiple vacuum ports 122 enables a higher vacuum flow rate to reach the suction area inside the suction cups 130.

In one embodiment, a smart compensator may be implemented in the configuration disclosed and illustrated herein. In one embodiment, analog sensors may be placed on each gripper chamber to detect zone specific leakage via vacuum differential. This data may be used to actively disable leaking zones during a grasp cycle to prevent leakage from contaminating the rest of the gripper's retention capacity.

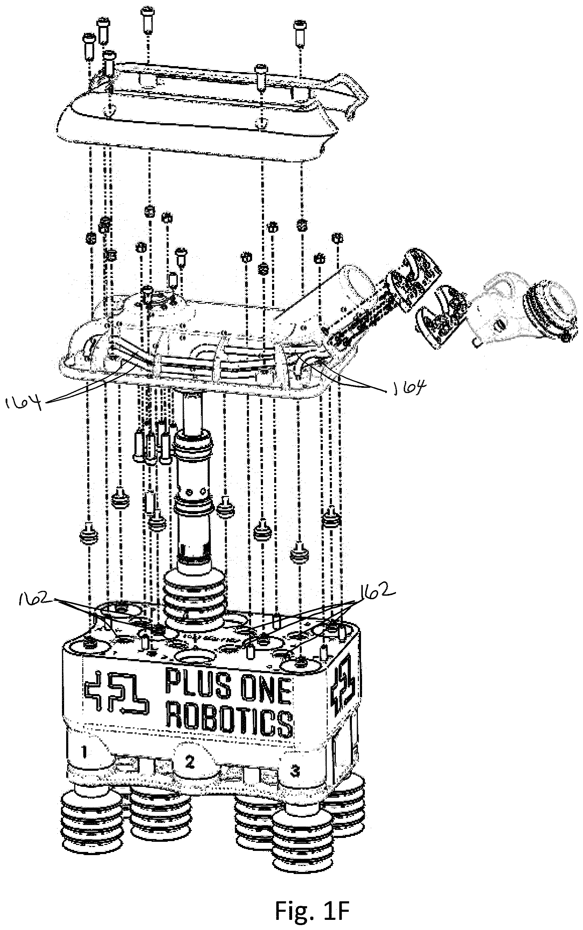

As shown in Fig. 1F, the top portion of the gripper body 116 is substantially hollow. This hollow top portion of the gripper body 116 is part of the vacuum pathway. As vacuum is applied through the vacuum source connector 102, the top portion of the gripper body 116 is filled with a vacuum atmosphere. Fig. 1F further illustrates vacuum cavities 162 in the compensator block portion of the gripper body 116. The vacuum pressure may flow from the hollow top portion of the gripper body 116 through the vacuum cavities 162, and through the suction cups 130 of the compensators 118 that are in the extended position. Thus, the vacuum cavities are also part of the vacuum pathway.

Fig. 1F further illustrates the compressed air lines 164 that are attached to the gas ports 112 at the proximal ends of the compensators 118. In the illustrated example, the gripping system 114 includes eight compensators 118 and eight respective air lines 164. However, the gripping system 114 may include any desired number of compensators and a respective number of air lines.

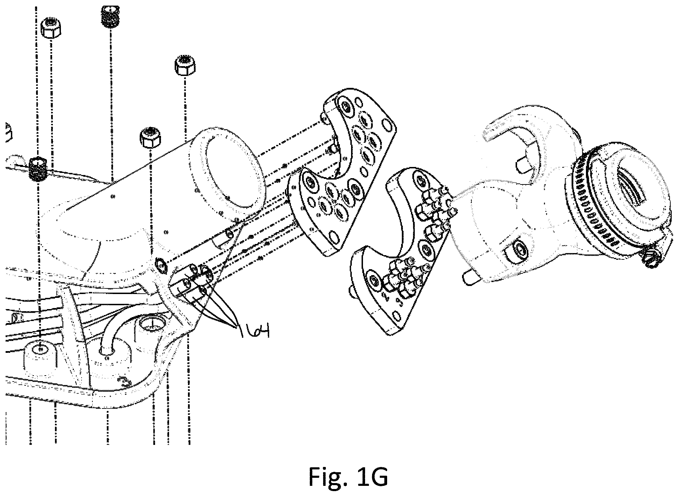

Fig. 1G illustrates the connection between the individual air lines and the compressed air connector. In one embodiment, the connection comprises a utility disconnect or a quick disconnect feature that drastically reduces the recovery time in the event of a major system failure. By incorporating a quick-disconnect mechanism, the upper housing can be easily replaced in the event of a crash without having to modify the dress-pack. This design significantly improves the maintainability and serviceability of the system. In the event of a major failure or crash, the modular nature of the utility disconnect allows for swift replacement of damaged components, such as the upper housing, without requiring extensive modifications to the surrounding dress-pack. Thereby minimizing downtime and ensuring that the system can be quickly restored to full functionality, even in the face of unexpected incidents.

The configuration illustrated herein further improves the life of the device and improves its maintainability. For example, the compensator assembly 118 provides separate passages for "clean" compressed air and "dirty" vacuum flow. Isolating the "dirty" vacuum flow generally results in better longevity of the bearing surfaces. Additionally, as designed and illustrated, the compensator assembly design is easily removed/replaced as a unit from the system in the event of a critical failure.

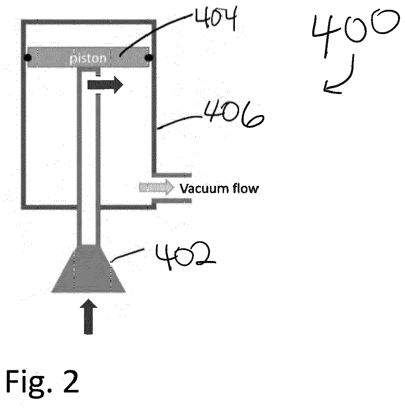

For additional context, the schematic diagram in Fig. 2 illustrates alternative systems 400, which enable extension of the compensator 402 with the activation of the vacuum channel. This configuration eliminates the needs for additional parts for extending the compensator 402, but introduces maintenance issues as follows: (1) the piston 404 sealed within the cylinder 406 operates in the dirty air channel and will therefore accumulate dust without the ability to easily clean the actuating surfaces; (2) the cylinders 406 themselves are not easily accessible in the event of a system failure. To mitigate these issues, the present invention, as illustrated herein, implements the following features: (1) actuator seals are isolated from the dirty air channel; (2) exterior bushings in the dirty air channel vent to atmosphere (additionally slight leakage cleans the running surfaces); (3) the compensator assembly 118 is a maintainable/replaceable item such that it is easy to swap it out when it inevitably fails.

### Conceptual Architecture

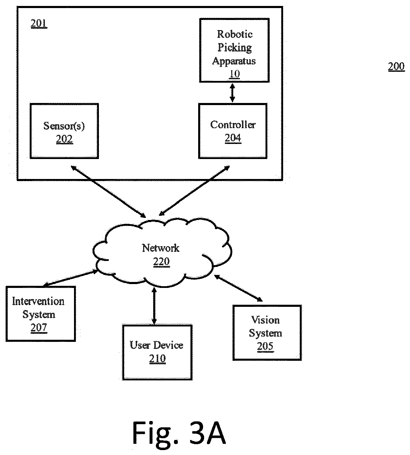

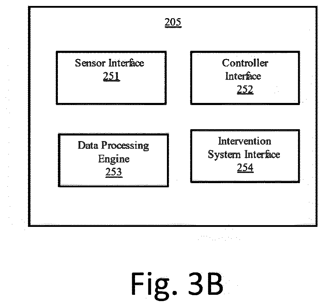

Fig. 3 illustrates an exemplary embodiment of a system for robot picking environment 200 according to one embodiment. The robot picking environment 200 includes a pick cell 201 that includes one or more sensors 202, a controller 204, and the robotic picking unit 10. The robot picking environment 200 also includes a vision system 205, an intervention system 207, and one or more user device(s) 210. The components of the robot picking environment 200 can communicate via a network 220 over which the various systems communicate and interact. The various computing devices described herein are exemplary and for illustration purposes only. The system can be reorganized or consolidated, as understood by a person of ordinary skill in the art, to include more or fewer components and/or to perform the same tasks on one or more other servers or computing devices without departing from the scope of the invention.

The pick cell 201 generally represents a robotic picking environment where robotic picking operations are performed to pick and/or move objects from one location to another. The exemplary pick cell 201 includes the robotic picking unit 10, the controller 204, the one or more sensors 202. The pick cell 201 can be associated with automated or semi-automated robotic picking operations. The robotic picking unit 10 of the pick cell 201 can comprise at least one of a robotic arm and the vacuum gripping system 20 for picking and/or moving objects within the pick cell 201, such as from a first (*e.g.,* pick) location to a second (*e.g*., placement) location. The controller 204 generally includes computing architecture (hardware and/or software) configured to control the robotic picking unit 208. In one aspect, the controller 204 can relay pick instructions. In one aspect, the controller 204 can convert pick information (*e.g*., pick coordinates, pick points) into pick instructions actionable by the robotic picking unit 208. The controller 204 can also include self-diagnostic capabilities and algorithms to determine when suction cups 130 need replacing and/or lines are clogged.

The sensors can include any type of sensor including, but not limited to, image capture sensors/cameras, video sensors/cameras, depth sensors, audio sensors (*e.g*., microphone), infrared sensors, thermal sensors, vibration/seismic sensors, x-ray sensors, millimeter wave scanners and other electromagnetic radiation sensors/scanners, *etc.* The sensor can be modular and configurable such that individual sensors of any type can be added to or removed from the sensor module as desired or as appropriate for a given application/environment. Depending on the particular application, information from at least one sensor can be used to trigger a query. The query can be processed to determine what additional data is needed (e.g., data from at least one of first and second sensor modules). The query and any corresponding data can be processed to provide an appropriate response which can include an intervention response from a remote intervention system (*e.g.*, intervention system 207).

In embodiments, the vision system 205 utilizes the data received from the one or more sensors 202 to determine a pose of the robotic arm 26, the positioning of the vacuum gripping system 20 relative to an item to be gripped, and a number and location of the suction cups 130 to be extended to engage the object. The data can include multidimensional imaging data of the object. The vision system 205 utilizes the data to determine which suction cups 130 should be extended and thereby activated in advance of the pick, rather than using seal information. As such, the vacuum gripping system 20 reduces and potentially minimizes time to pick, while maximizing pick surface. The vision system 205 can consider arm pose and cup activation separately or jointly. In one embodiment, the pick position and cup activation can be done jointly and optimized together to improve the odds of an appropriate pick. In other embodiments, the pick position and cup activation process is serial, including but not limited to the following steps: first, the vision system 205 discovers all possible pickable objects. Then, the vision system 205 generates potential pick positions (robotic arm poses). The vision system 205 ranks the poses by a number of metrics. The metric can include, for example, time to move the arm to a pose, amount of rotation required, distance from the place location, *etc.* The vision system 205 then selects the pose that maximizes the metrics. Given a pick position (robotic arm pose), the vision system 205 utilizes a cup activation algorithm to determine which suction cups 130 to extend. The vision system 205 examines the 3D and/or color data collected from the sensors 202 under a pick position and computes an activation score for each suction cup 130. All cups with a score above a configurable threshold are activated, and the others are retracted to not interfere with the grip.

If the vision system cannot select a pose or positioning with high enough confidence, the vision system 205 alerts the intervention system 207 and/or one or more user devices 210. For example, a user (*e.g*., human-in-the-loop crew chief) can provide assistance in identifying the object via the intervention system 207 and/or one or more user devices 210.

The user device(s) 210 include, generally, a computer or computing device including functionality for communicating (*e.g*., remotely) over the network 220. Data can be collected from user devices 210, and data requests can be initiated from each user device 210. User device(s) 210 can be a server, a desktop computer, a laptop computer, personal digital assistant (PDA), an in- or out-of-car navigation system, a smart phone or other cellular or mobile phone, or mobile gaming device, among other suitable computing devices. User devices 210 can execute one or more applications, such as a web browser (e.g., Microsoft Windows Internet Explorer, Mozilla Firefox, Apple Safari, Google Chrome, and Opera, etc.), or a dedicated application to submit user data, or to make prediction queries over a network 220.

In particular embodiments, each user device 210 can be an electronic device including hardware, software, or embedded logic components or a combination of two or more such components and capable of carrying out the appropriate functions implemented or supported by the user device 210. For example, and without limitation, a user device 210 can be a desktop computer system, a notebook computer system, a netbook computer system, a handheld electronic device, or a mobile telephone. The present disclosure contemplates any user device 210. A user device 210 can enable a network user at the user device 210 to access network 220. A user device 210 can enable its user to communicate with other users at other user devices 210.

The user device 210 can have a web browser, such as MICROSOFT INTERNET EXPLORER, GOOGLE CHROME or MOZILLA FIREFOX, and can have one or more addons, plug-ins, or other extensions, such as TOOLBAR or YAHOO TOOLBAR. A user device 110 can enable a user to enter a Uniform Resource Locator (URL) or other address directing the web browser to a server, and the web browser can generate a HyperText Transfer Protocol (HTTP) request and communicate the HTTP request to the server. The server can accept the HTTP request and communicate to the user device 210 one or more Hyper Text Markup Language (HTML) files responsive to the HTTP request. The user device 210 can render a web page based on the HTML files from the server for presentation to the user. The present disclosure contemplates any suitable web page files. As an example, and not by way of limitation, web pages can render from HTML files, Extensible HyperText Markup Language (XHTML) files, or Extensible Markup Language (XML) files, according to particular needs. Such pages can also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web page encompasses one or more corresponding web page files (which a browser can use to render the web page) and vice versa, where appropriate.

The user device 210 can also include an application that is loaded onto the user device 210. The application obtains data from the network 220 and displays it to the user within the application interface.

Exemplary user devices are illustrated in some of the subsequent figures provided herein. This disclosure contemplates any suitable number of user devices, including computing systems taking any suitable physical form. As example and not by way of limitation, computing systems can be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, the computing system can include one or more computer systems; be unitary or distributed; span multiple locations; span multiple machines; or reside in a cloud, which can include one or more cloud components in one or more networks. Where appropriate, one or more computing systems can perform without substantial spatial or temporal limitation one or more steps of one or more methods described or illustrated herein. As an example, and not by way of limitation, one or more computing systems can perform in real-time or in batch mode one or more steps of one or more methods described or illustrated herein. One or more computing systems can perform at different times or at different locations one or more steps of one or more methods described or illustrated herein, where appropriate.

Network cloud 220 generally represents a network or collection of networks (such as the Internet or a corporate intranet, or a combination of both) over which the various components (including other components that can be necessary to execute the system described herein, as would be readily understood to a person of ordinary skill in the art) illustrated in Fig. 3A can communicate. In particular embodiments, network 220 is an intranet, an extranet, a virtual private network (VPN), a local area network (LAN), a wireless LAN (WLAN), a wide area network (WAN), a metropolitan area network (MAN), a portion of the Internet, or another network 220 or a combination of two or more such networks 220. One or more links connect the systems and databases described herein to the network 220. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable network 220, and any suitable link for connecting the various systems and databases described herein.

The network 220 connects the various systems and computing devices described or referenced herein. In particular embodiments, network 220 is an intranet, an extranet, a virtual private network (VPN), a local area network (LAN), a wireless LAN (WLAN), a wide area network (WAN), a metropolitan area network (MAN), a portion of the Internet, or another network 421 or a combination of two or more such networks 220. The present disclosure contemplates any suitable network 220.

One or more links couple one or more systems, engines or devices to the network 150. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable links coupling one or more systems, engines or devices to the network 150.

In particular embodiments, each system or engine can be a unitary server or can be a distributed server spanning multiple computers or multiple datacenters. Systems, engines, or modules can be of various types, such as, for example and without limitation, web server, news server, mail server, message server, advertising server, file server, application server, exchange server, database server, or proxy server. In particular embodiments, each system, engine or module can include hardware, software, or embedded logic components or a combination of two or more such components for carrying out the appropriate functionalities implemented or supported by their respective servers. For example, a web server is generally capable of hosting websites containing web pages or particular elements of web pages. More specifically, a web server can host HTML files or other file types, or can dynamically create or constitute files upon a request, and communicate them to client/user devices or other devices in response to HTTP or other requests from client devices or other devices. A mail server is generally capable of providing electronic mail services to various client devices or other devices. A database server is generally capable of providing an interface for managing data stored in one or more data stores.

In particular embodiments, one or more data storages can be communicatively linked to one or more servers via one or more links. In particular embodiments, data storages can be used to store various types of information. In particular embodiments, the information stored in data storages can be organized according to specific data structures. In particular embodiments, each data storage can be a relational database. Particular embodiments can provide interfaces that enable servers or clients to manage, e.g., retrieve, modify, add, or delete, the information stored in data storage.

The system can also contain other subsystems and databases, which are not illustrated in Figs. 3A and 3B, but would be readily apparent to a person of ordinary skill in the art. For example, the system can include databases for storing data, storing features, storing outcomes (training sets), and storing models. Other databases and systems can be added or subtracted, as would be readily understood by a person of ordinary skill in the art, without departing from the scope of the invention.

### Vision System

Fig. 3B illustrates an exemplary embodiment of the vision system 205 for use in observational support in robotic picking applications. The exemplary vision system 205 includes a sensor interface 251, a controller interface 252, a data processing engine 253, and an intervention system interface 254. The various computing devices described herein are exemplary and for illustration purposes only. The system can be reorganized or consolidated, as understood by a person of ordinary skill in the art, to include more or fewer components and/or to perform the same tasks on one or more other servers or computing devices without departing from the scope of the invention.

The sensor interface 251 obtains data from the sensor 202. The sensor interface 251 can obtain data through an application programming interface (API). The sensor interface 251 can obtain data in response to an internal or external trigger.

The controller interface 252 is operable to communicate with a controller (e.g., controller 204) associated with a robotic picking system or unit. The controller interface 252 can obtain instruction from a controller to obtain and process data from the sensors 202. The controller interface 252 can provide at least one of pick information and pick instructions to a controller, as described herein.

The data processing engine 253 obtains the data from the sensors 202. The data processing engine 253 utilizes the data received from the one or more sensors 202 to determine a pose of the robotic arm, the positioning of the vacuum gripping system 20 relative to an item to be gripped, and a number of the suction cups 130 to be extended to engage the object. The data can include multidimensional imaging data of the object. The data processing engine 253 utilizes the data to determine what suction cups 130 should be extended and thereby activated in advance of the pick, rather than using seal information. As such, the vacuum gripping system 20 reduces and potentially minimizes time to pick, while maximizing pick surface. The data processing engine 253 can consider arm pose and cup activation separately or jointly. In one embodiment, the pick position and cup activation can be done jointly and optimized together to improve the odds of an appropriate pick. In other embodiments, the pick position and cup activation process is serial, including but not limited to the following steps: first, the data processing engine 253 discovers all possible pickable objects. Then, the data processing engine 3B253 generates potential pick positions (robotic arm poses). The data processing engine 253 ranks the poses by a number of metrics. The metric can include, for example, time to move the arm to a pose, amount of rotation required, distance from the place location, *etc.* The data processing engine 253 then selects the pose that maximizes the metrics. Given a pick position (robotic arm pose), the data processing engine 253 utilizes a cup activation algorithm to determine which suction cups 130 to extend. The data processing engine 253 examines the 3D data collected from the sensors 202 under a pick position and computes an activation score for each suction cup 130. All cups with a score above a configurable threshold are activated, and the others are retracted to not interfere with the grip.

The intervention system interface 254 is operable to communicate with an intervention system, such as intervention system 207. The intervention system interface 254 can provide at least one of: sensor module data, data processing result data, and grading information, to the intervention system. Intervention system interface 254 can obtain intervention response data wherein the response data includes at least one of information to assist second vision system 106 with determining pick information and/or pick instructions and information to be provided to controller 204 for controlling robotic picking operations.

### Process for operating the robot picking apparatus

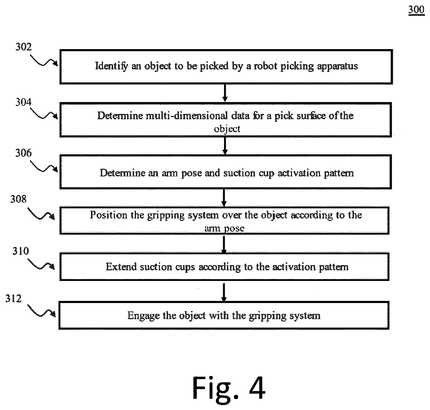

Fig. 4A illustrates an exemplary process for operating a robotic picking apparatus. The process steps described herein can be performed in association with a system such as that described in FIGS. 1A-1G and/or FIGS. 3A and 3B above or in association with a different system. The steps can be reordered or consolidated, without departing from the scope of the invention, as would be apparent to one of ordinary skill in the art. Furthermore, any of the listed steps can be optional depending on the particular application of the inventive concept as would be apparent to one of ordinary skill in the art.

At step 302, the process includes identifying an object to be picked by a robot picking apparatus. For example, the object 150 can need to be moved by the robot picking unit 10. The controller 204 can send a request to the vision system 205 to identify a pick location on the object 150 and cup activation configuration for the gripping system 20. Identifying an object may comprise determining at least one pickable object within a pick area. Identifying an object may comprise determining a plurality of pickable objects within a pick area.

At step 304, multi-dimensional data for a pick surface of the object is determined or obtained. For example, the sensors 202 can capture three-dimensional (3D) image data of the object. The sensors 202 can provide the data to the vision system 205. The 3D data may comprise an RGB depth image. A mask may be generated (e.g. by a vision system 205 or an image processing module) from the 3D data of the pick area. The mask may provide an indication of which pixels in the 3D data are associated with each object or each of a plurality of different objects. The mask may be generated using artificial intelligence (AI) algorithms such as an AI image segmentation algorithm. The mask may be generated by a variety of image processing techniques suitable for distinguishing and determining the bounds of objects, such as object detection algorithms and/or edge detection algorithms. The algorithms may use at least one of pattern recognition or analysis, gradient analysis, and feature vectors and/or maps. Exemplary algorithms for use in object detection include, but are not limited to, histogram of oriented gradients, region based convolutional neural networks (R-CNN), faster R-CNN, single shot detector (SSD), You Only Look Once (YOLO), and other artificial intelligence (AI) based algorithms.

At step 306, one or more arm pose(s) and suction cup activation pattern(s) is/are determined. For example, the vision system 205 or a separate data processing system, engine or module, utilizes the data to determine a pick configuration, such as what suction cups 130 should be extended and thereby activated in advance of the pick, rather than using seal information during the pick. As such, the vacuum gripping system 20 reduces and potentially minimizes time to pick, while maximizing pick surface. Pick configuration (e.g. pick position or robot pose and cup activation) may be based on arm pose and cup activation separately or jointly. In one embodiment, the pick position and cup activation can be done jointly and optimized together to improve the odds of an appropriate pick. In other embodiments, the pick position and cup activation process is serial, including but not limited to the following steps: first, the vision system 205 discovers all possible pickable objects. Then, the vision system 205 generates potential pick positions (robotic arm poses). The vision system 205 ranks the poses by a number of metrics. The metric can include, for example, time to move the arm to a pose, amount of rotation required, distance from the place location, *etc.* The vision system 205 then selects the pose that maximizes the metrics. Given a pick position (robotic arm pose), the vision system 205 utilizes a cup activation algorithm to determine which suction cups 130 to extend. The vision system 205 examines the 3D data collected from the sensors 202 under a pick position and computes an activation score for each suction cup 130. All cups with a score above a configurable threshold are activated, and the others are retracted to not interfere with the grip.

In one aspect, the cup activation algorithm uses the depth values of the obtained 3D data (e.g. RGB image) in combination with the mask to determine cup activation for a given object or a plurality of objects. For each object, the cup activation algorithm may consider a plurality of gripper positions which would overlie or overlap (in whole or in part) the object. For each gripper position, the data points (e.g. the depth data) which would correspond to an area under each cup of the gripper can be evaluated to determine a cup activation score. Factors which may be used in computing the activation score may comprise at least one of, but is not limited to, the total number of depth data points (e.g. pixel values) under each cup, a flatness metric associated with a plane formed by the depth data points under each cup, the average depth of the pixels under each cup, the standard deviation of the depth of the pixels under each cup, the color associated with the pixel value of an RGB depth image for each pixel under each cup. At least one of these factors may be used to generate an activation score which is compared against a threshold to determine if the cup should be activated. A plurality of these factors may be combined using a weighting algorithm (using linear or non-linear weighting) in order to generate an activation score for a given cup. The activation score may be compared to a threshold to determine if the cup should be activated when the picking operation is executed. The resulting output for each gripper position will comprise an indication of the total number of cups which can or should be activated (based on the threshold comparison) for that gripper position.

In addition to the total number of activated cups, the process may also take into consideration the location of the gripper relative to the center of the object in determining a pose and cup activation pattern to be used in picking the object. In one aspect, a gripper position associated with the highest number of activated cups and closest to the center (or within some threshold distance of the center) may be identified as the preferred gripper position to use for picking the object. In one aspect, the determined pose and cup activation pattern to be used in picking the object may be based on a combination of factors described above, including, but not limited to, at least one of the total number of cups that can be activated for a given gripper position, the proximity of the gripper to the center of the object to be picked, a difficulty metric associated with the pose needed for a given gripper position (the difficulty metric indicating how difficult is it for the robot or robotic arm to get into position for this gripper position/orientation), direction of approach of the gripper and/or robot to the object (e.g. whether the gripper can come straight down onto the object, whether the gripper will approach at an angle, etc.), a time necessary to move the arm to a pose, amount of rotation or movement required, and a distance from the place location. These factors are not intended to be limiting and other factors may be used alone or in combination as would be apparent to one of ordinary skill in the art. These factors may be combined using a weighting algorithm (using linear or non-linear weighting) to generate a composite score. The composite score can be ranked to determine the pose and cup activation pattern to be used. The highest composite score, in general, may indicate which gripper position is associated with activation of the most cups, is in proximity to the center of the object and uses a robot pose which is favorable to yielding a successful pick in a time efficient manner. This is one example of what the composite score may indicate and other indications are possible depending on the variables considered in the weighted combination as would be apparent to one of ordinary skill in the art.

The above described approach, depending on the scenario, may result in a large number of permutations leading to computational burden and increased decision time leading to lower throughput in a given environment. In some scenarios, a simplification technique(s) may be applied to the decision algorithm to reduce the computational burden, increase the decision speed, and maintain a higher throughput. The simplification may comprise making approximations and/or assumptions to reduce the number of permutations. For example, one or more factors described above may be assumed and held fixed or constant rather than considering all possibilities in order to reduce the total permutations and improve throughput efficiency. In other words, it may not be necessary to determine the best pick configuration possible, but instead it may be more beneficial to simplify the complexity of the analysis to determine a pick configuration which is expected to yield a successful outcome. For example, rather than considering all possible poses, constraints may be placed on the number of poses to consider such that a fewer number of poses are evaluated. For example, limiting the analysis to only poses which allow the gripper to approach the object from a top down approach may greatly reduce the number of permutations and decision time while still maintaining a sufficient success rate for picking the object. Another example of an approximation or assumption may include limiting the analysis to gripper positions within some threshold distance from the center of the object as these may be more likely to be associated with a successful pick for a number of reasons. These are merely exemplary assumptions or approximations and others may be used as would be apparent to one of ordinary skill in the art. In one aspect, rather than considering all permutations, the algorithm may stop at the first identified pose and cup activation pattern which satisfies a confidence threshold indicative of the likelihood of a successful pick. For example, rather than generating a composite score for every permutation and ranking the scores, the first composite score which satisfies the confidence threshold may be used to identify the corresponding pose and cup activation pattern to be used to pick the object. This may be done with or without assumptions or approximations as a way to reduce overall computational burden and make pick decisions in a timely manner to maintain sufficient throughput for a given environment.

At step 308, the gripping system is positioned over the object according to the arm pose. For example, the controller 204 can control the robotic arm to position the gripping system 20 over the pick surface. The controller 204 may control the robotic arm based on input associated with the pose and cup activation as determined above by a vision system or other data processing system.

At step 310, suction cups can be extended according to the activation pattern. The controller 204 can activate the gas port 112 to the vacuum grippers 118 that correspond to the suction cups 130 to be activated in the activation pattern. When the gas port 112 is activated, a gas fills the expansion volume 126 causing the pressure in the expansion volume 126 to rise. In response, the piston 124 is forced downward. As such, when the piston 124 moves downward, the suction cup 130 extends from the gripper body 116. As the piston 124 moves downward, the vacuum port 122 aligns with the vacuum pathway 140 thereby placing the suction area 134 of the suction cup 130 in fluid communication with the vacuum pathway 140. Accordingly, each of the vacuum grippers 118 can be actuated independently thereby allowing the selection of the suction cups 130 to be extended. The gas cylinder 120 also operates as a gas spring when engaging with an object to be picked.

At step 312, the object is engaged with the gripping system. The controller 204 can control the robotic arm to move the gripping system 20 to the pick surface. When contact is made, the suction cups 130 that are extended form a suction coupling with the object.

Although described herein as a process for providing instructions to a controller associated with robotic picking operations, the process can be adapted for other observational applications where the particular data obtained and processed and the response provided would be consistent with the needs of the given application as would be apparent to one of ordinary skill in the art. For example, in non-robotic picking applications, it would not be necessary to provide pick instructions, but instead to provide application appropriate feedback sufficient to satisfy the application specific query.

In one embodiment of the invention, outer cups may be selectively actuated to pick polybags. Handling a polybag on its perimeter minimizes induced deformation from the transfer and results in better barcode read quality. In one embodiment, the parcel classifier is used to activate perimeter handling thereby disabling interior cups that are identified in a grasping pattern.

### Hardware Architecture

Generally, the techniques disclosed herein can be implemented on hardware or a combination of software and hardware. For example, they can be implemented in an operating system kernel, in a separate user process, in a library package bound into network applications, on a specially constructed machine, on an application-specific integrated circuit (ASIC), or on a network interface card.

Software/hardware hybrid implementations of at least some of the embodiments disclosed herein can be implemented on a programmable network-resident machine (which should be understood to include intermittently connected network-aware machines) selectively activated or reconfigured by a computer program stored in memory. Such network devices can have multiple network interfaces that can be configured or designed to utilize different types of network communication protocols. A general architecture for some of these machines can be described herein in order to illustrate one or more exemplary means by which a given unit of functionality can be implemented. According to specific embodiments, at least some of the features or functionalities of the various embodiments disclosed herein can be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein can be implemented in one or more virtualized computing environments (e.g., network computing clouds, virtual machines hosted on one or more physical computing machines, or other appropriate virtual environments). Any of the above-mentioned systems, units, modules, engines, components or the like can be and/or comprise hardware and/or software as described herein.

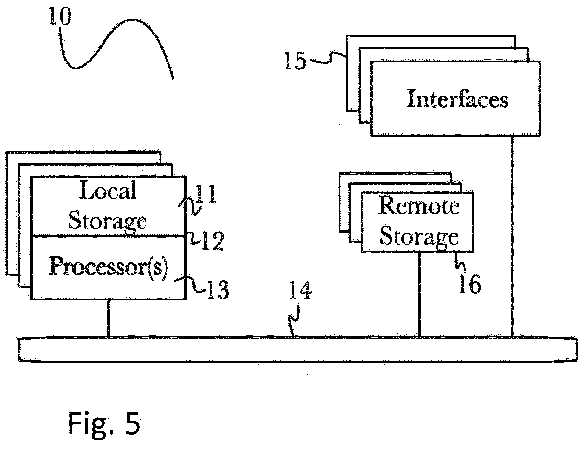

Referring now to Fig. 5, there is shown a block diagram depicting an exemplary computing device 10 suitable for implementing at least a portion of the features or functionalities disclosed herein. Computing device 10 can be, for example, any one of the computing machines listed in the previous paragraph, or indeed any other electronic device capable of executing software- or hardware-based instructions according to one or more programs stored in memory. Computing device 10 can be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one aspect, computing device 10 includes one or more central processing units (CPU) 12, one or more interfaces 15, and one or more busses 14 (such as a peripheral component interconnect (PCI) bus). When acting under the control of appropriate software or firmware, CPU 12 can be responsible for implementing specific functions associated with the functions of a specifically configured computing device or machine. For example, in at least one aspect, a computing device 10 can be configured or designed to function as a server system utilizing CPU 12, local memory 11 and/or remote memory 16, and interface(s) 15. In at least one aspect, CPU 12 can be caused to perform one or more of the different types of functions and/or operations under the control of software modules or components, which for example, can include an operating system and any appropriate applications software, drivers, and the like.

CPU 12 can include one or more processors 13 such as, for example, a processor from one of the Intel, ARM, Qualcomm, and AMD families of microprocessors. In some embodiments, processors 13 can include specially designed hardware such as application-specific integrated circuits (ASICs), electrically erasable programmable read-only memories (EEPROMs), field-programmable gate arrays (FPGAs), and so forth, for controlling operations of computing device 10. In a particular aspect, a local memory 11 (such as non-volatile random-access memory (RAM) and/or read-only memory (ROM), including for example one or more levels of cached memory) can also form part of CPU 12. However, there are many different ways in which memory can be coupled to system 10. Memory 11 can be used for a variety of purposes such as, for example, caching and/or storing data, programming instructions, and the like. It should be further appreciated that CPU 12 can be one of a variety of system-on-a-chip (SOC) type hardware that can include additional hardware such as memory or graphics processing chips, such as a QUALCOMM SNAPDRAGON^{™} or SAMSUNG EXYNOS^{™} CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one aspect, interfaces 15 are provided as network interface cards (NICs). Generally, NICs control the sending and receiving of data packets over a computer network; other types of interfaces 15 can for example support other peripherals used with computing device 10. Among the interfaces that can be provided are Ethernet interfaces, frame relay interfaces, cable interfaces, DSL interfaces, token ring interfaces, graphics interfaces, and the like. In addition, various types of interfaces can be provided such as, for example, universal serial bus (USB), Serial, Ethernet, FIREWIRE^{™}, THUNDERBOLT^{™}, PCI, parallel, radio frequency (RF), BLUETOOTH^{™}, near-field communications (e.g., using near-field magnetics), 802.11 (WIFI), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces 15 can include physical ports appropriate for communication with appropriate media. In some cases, they can also include an independent processor (such as a dedicated audio or video processor, as is common in the art for high-fidelity A/V hardware interfaces) and, in some instances, volatile and/or non-volatile memory (e.g., RAM).

Although the system shown in Fig. 5 illustrates one specific architecture for a computing device 10 for implementing one or more of the embodiments described herein, it is by no means the only device architecture on which at least a portion of the features and techniques described herein can be implemented. For example, architectures having one or any number of processors 13 can be used, and such processors 13 can be present in a single device or distributed among any number of devices. In one aspect, single processor 13 handles communications as well as routing computations, while in other embodiments a separate dedicated communications processor can be provided. In various embodiments, different types of features or functionalities can be implemented in a system according to the aspect that includes a client device (such as a tablet device or smartphone running client software) and server systems (such as a server system described in more detail below).

Regardless of network device configuration, the system of an aspect can employ one or more memories or memory modules (such as, for example, remote memory block 16 and local memory 11) configured to store data, program instructions for the general-purpose network operations, or other information relating to the functionality of the embodiments described herein (or any combinations of the above). Program instructions can control execution of or comprise an operating system and/or one or more applications, for example. Memory 16 or memories 11, 16 can also be configured to store data structures, configuration data, encryption data, historical system operations information, or any other specific or generic non-program information described herein.

Because such information and program instructions can be employed to implement one or more systems or methods described herein, at least some network device embodiments can include non transitory machine-readable storage media, which, for example, can be configured or designed to store program instructions, state information, and the like for performing various operations described herein. Examples of such non transitory machine- readable storage media include, but are not limited to, magnetic media such as hard disks, floppy disks, and magnetic tape; optical media such as CD-ROM disks; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that can combine physical components of solid state and hard disk drives in a single hardware device (as are becoming increasingly common in the art with regard to personal computers), memristor memory, random access memory (RAM), and the like. It should be appreciated that such storage means can be integral and non-removable (such as RAM hardware modules that can be soldered onto a motherboard or otherwise integrated into an electronic device), or they can be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media can be utilized interchangeably. Examples of program instructions include both object code, such as can be produced by a compiler, machine code, such as can be produced by an assembler or a linker, byte code, such as can be generated by for example a JAVA^{™} compiler and can be executed using a Java virtual machine or equivalent, or files containing higher level code that can be executed by the computer using an interpreter (for example, scripts written in Python, Perl, Ruby, Groovy, or any other scripting language).

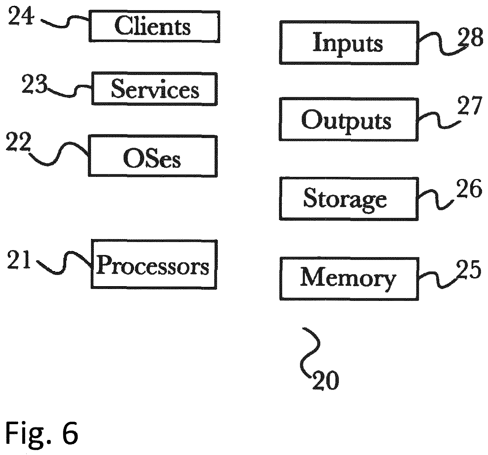

In some embodiments, systems can be implemented on a standalone computing system. Referring now to Fig. 6, there is shown a block diagram depicting a typical exemplary architecture of one or more embodiments or components thereof on a standalone computing system. Computing device 20 includes processors 21 that can run software that carry out one or more functions or applications of embodiments, such as for example a client application. Processors 21 can carry out computing instructions under control of an operating system 22 such as, for example, a version of MICROSOFT WINDOWS^{™} operating system, APPLE macOS^{™} or iOS^{™} operating systems, some variety of the Linux operating system, ANDROID^{™} operating system, or the like. In many cases, one or more shared services 23 can be operable in system 20, and can be useful for providing common services to client applications. Services 23 can for example be WINDOWS^{™} services, user-space common services in a Linux environment, or any other type of common service architecture used with operating system 21. Input devices 28 can be of any type suitable for receiving user input, including for example a keyboard, touchscreen, microphone (for example, for voice input), mouse, touchpad, trackball, or any combination thereof. Output devices 27 can be of any type suitable for providing output to one or more users, whether remote or local to system 20, and can include for example one or more screens for visual output, speakers, printers, or any combination thereof. Memory 25 can be random-access memory having any structure and architecture known in the art, for use by processors 21, for example to run software. Storage devices 26 can be any magnetic, optical, mechanical, memristor, or electrical storage device for storage of data in digital form (such as those described above, referring to FIG. 4). Examples of storage devices 26 include flash memory, magnetic hard drive, CD-ROM, and/or the like.

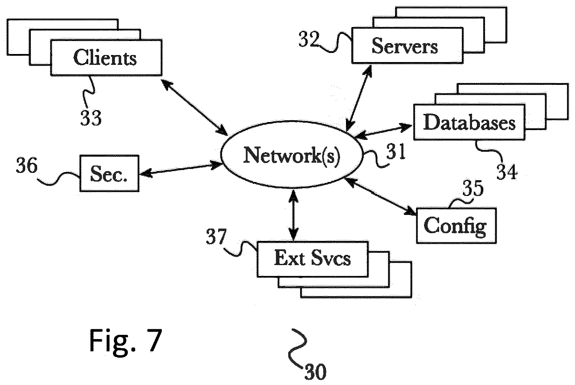

In some embodiments, systems can be implemented on a distributed computing network, such as one having any number of clients and/or servers. Referring now to Fig. 7, there is shown a block diagram depicting an exemplary architecture 30 for implementing at least a portion of a system according to one aspect on a distributed computing network. According to the aspect, any number of clients 33 can be provided. Each client 33 can run software for implementing clientside portions of a system; clients can comprise a system 20 such as that illustrated in Fig. 6. In addition, any number of servers 32 can be provided for handling requests received from one or more clients 33. Clients 33 and servers 32 can communicate with one another via one or more electronic networks 31, which can be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the aspect does not prefer any one network topology over any other). Networks 31 can be implemented using any known network protocols, including for example wired and/or wireless protocols.

In addition, in some embodiments, servers 32 can call external services 37 when needed to obtain additional information, or to refer to additional data concerning a particular call. Communications with external services 37 can take place, for example, via one or more networks 31. In various embodiments, external services 37 can comprise web-enabled services or functionality related to or installed on the hardware device itself. For example, in one aspect where client applications are implemented on a smartphone or other electronic device, client applications can obtain information stored in a server system 32 in the cloud or on an external service 37 deployed on one or more of a particular enterprise's or user's premises.

In some embodiments, clients 33 or servers 32 (or both) can make use of one or more specialized services or appliances that can be deployed locally or remotely across one or more networks 31. For example, one or more databases 34 can be used or referred to by one or more embodiments. It should be understood by one having ordinary skill in the art that databases 34 can be arranged in a wide variety of architectures and using a wide variety of data access and manipulation means. For example, in various embodiments one or more databases 34 can comprise a relational database system using a structured query language (SQL), while others can comprise an alternative data storage technology such as those referred to in the art as "NoSQL" (for example, HADOOP CASSANDRA^{™}, GOOGLE BIGTABLE^{™}, and so forth). In some embodiments, variant database architectures such as column-oriented databases, in-memory databases, clustered databases, distributed databases, or even flat file data repositories can be used according to the aspect. It will be appreciated by one having ordinary skill in the art that any combination of known or future database technologies can be used as appropriate, unless a specific database technology or a specific arrangement of components is specified for a particular aspect described herein. Moreover, it should be appreciated that the term "database" as used herein can refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, some embodiments can make use of one or more security systems 36 and configuration systems 35. Security and configuration management are common information technology (IT) and web functions, and some amount of each are generally associated with any IT or web systems. It should be understood by one having ordinary skill in the art that any configuration or security subsystems known in the art now or in the future can be used in conjunction with embodiments without limitation, unless a specific security 36 or configuration system 35 or approach is specifically required by the description of any specific aspect.

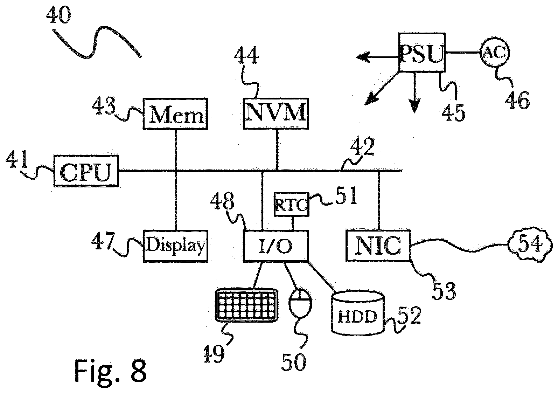

Fig. 8 shows an exemplary overview of a computer system 40 as can be used in any of the various locations throughout the system. It is exemplary of any computer that can execute code to process data. Various modifications and changes can be made to computer system 40 without departing from the broader scope of the system and method disclosed herein. Central processor unit (CPU) 41 is connected to bus 42, to which bus is also connected memory 43, nonvolatile memory 44, display 47, input/output (I/O) unit 48, and network interface card (NIC) 53. I/O unit 48 can, typically, be connected to keyboard 49, pointing device 50, hard disk 52, and real-time clock 51. NIC 53 connects to network 54, which can be the Internet or a local network, which local network can or cannot have connections to the Internet. Also shown as part of system 40 is power supply unit 45 connected, in this example, to a main alternating current (AC) supply 46. Not shown are batteries that could be present, and many other devices and modifications that are well known but are not applicable to the specific novel functions of the current system and method disclosed herein. It should be appreciated that some or all components illustrated can be combined, such as in various integrated applications, for example Qualcomm or Samsung system-on-a-chip (SOC) devices, or whenever it can be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of various embodiments can be distributed among any number of client and/or server components. For example, various software modules can be implemented for performing various functions in connection with the system of any particular aspect, and such modules can be variously implemented to run on server and/or client components.

The skilled person will be aware of a range of possible modifications of the various embodiments described above. Accordingly, the present invention is defined by the claims and their equivalents.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments can be described using the expression "coupled" and "connected" along with their derivatives. For example, some embodiments can be described using the term "coupled" to indicate that two or more elements are in direct physical or electrical contact. The term "coupled," however, can also mean that two or more elements are not in direct contact with each other, but yet still co-operate or interact with each other. The embodiments are not limited in this context.

As used herein, the terms "includes," "comprising," "includes," "including," "has," "having" or any other variation thereof, are intended to cover a non-exclusive inclusion. For example, a process, method, article, or apparatus that includes a list of elements is not necessarily limited to only those elements but can include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false (or not present) and Bis true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for creating an interactive message through the disclosed principles herein. Thus, while particular embodiments and applications have been illustrated and described, it is to be understood that the disclosed embodiments are not limited to the precise construction and components disclosed herein. Various apparent modifications, changes and variations can be made in the arrangement, operation and details of the method and apparatus disclosed herein without departing from the spirit and scope defined in the appended claims.

## Claims

1. A gripping system for grabbing and releasing an object using a robotic arm, the gripping system comprising:
a gripper body for operably engaging the robotic arm, wherein the gripper body comprises a vacuum pathway, a vacuum source connector operably coupled to the vacuum pathway, and a compressed air source connector;
a plurality of compensators configured to extend and retract relative to the gripper body, wherein each compensator of the plurality of compensators has an extended position and a retracted position defining a range of motion therebetween, and wherein each compensator of the plurality of compensators comprises:
a cylinder having a distal end and a proximal end;
a piston configured for reciprocal linear translation within the cylinder;
a piston rod having a proximal end attached to the piston and a distal portion protruding out of the distal end of the cylinder; and
a vacuum chamber surrounding the cylinder and having a distal portion fixedly coupled to the distal portion of the piston rod, wherein the vacuum chamber is configured for being placed in communication with the vacuum pathway when the compensator is in the extended position and for being isolated from the vacuum pathway when the compensator is in the retracted position; and
a respective plurality of compressed air lines coupled to the compressed air source connector, wherein each one of the compressed air lines is operably coupled to a respective one of the compensators.

2. The gripping system of claim 1, wherein each one of the compensators further comprises a spring disposed within the cylinder, wherein the spring is at rest when the compensator is in the retracted position and is compressed when the compensator is in the extended position.

3. The gripping system of claim 2, wherein the spring comprises a compression spring that surrounds the piston rod, wherein the compression spring is configured to have an extended configuration at rest and a compressed configuration when the compensator is in the extended position.

4. The gripping system of claim 1, wherein one of the piston rod and the vacuum chamber comprises a distal end that is configured to be coupled to a vacuum cup, wherein the vacuum cup is configured for operably engaging a surface of an object and forming a pneumatic seal on the surface.

5. The gripping system of claim 1, wherein each compensator further comprises a vacuum port in a sidewall of the vacuum chamber, wherein the vacuum port is in fluid communication with a vacuum area at a distal end of the vacuum chamber, and wherein the vacuum port is in fluid communication with the vacuum pathway in a plurality of positions except for the retracted position.

6. The gripping system of claim 5, wherein the vacuum port is in fluid communication with the vacuum pathway in all positions except for the retracted position.

7. The gripping system of claim 5, wherein the vacuum port is in fluid communication with the vacuum pathway in all positions except for the first 10 mm of travel extending between the retracted position and the extended position.

8. The gripping system of claim 1, wherein each compensator further comprises a plurality of vacuum ports disposed radially around a sidewall of the vacuum chamber.

9. The gripping system of claim 1, wherein each one of the compressed air lines is coupled to a compressed air port on the proximal end of the cylinder of a respective one of the compensators.

10. A compensator configured to be attached to a gripper body of a gripping system for grabbing and releasing an object using a robotic arm, the compensator comprising:
a cylinder having a distal end and a proximal end;
a piston configured for reciprocal linear translation within the cylinder;
a piston rod having a proximal end attached to the piston and a distal portion protruding out of the distal end of the cylinder; and
a vacuum chamber surrounding the cylinder and having a distal portion fixedly coupled to the distal portion of the piston rod, the vacuum chamber further comprising a vacuum port in a sidewall of thereof,
wherein the compensator has a retracted position when the piston is in a proximal position and an extended position when the piston is in a distal position.

11. The compensator of claim 10, further comprising a spring disposed within the cylinder.

12. The compensator of claim 10, wherein the spring comprises a compression spring that surrounds the piston rod, wherein the compression spring is configured to have a stretch configuration at rest and a compressed configuration when the compensator is in the extended position.

13. The compensator of claim 10, wherein one of the piston rod and the vacuum chamber comprises a distal end that is configured to be coupled to a vacuum cup, wherein the vacuum cup is configured for operably engaging a surface of an object and forming a pneumatic seal on the surface.

14. The compensator of claim 10, wherein the vacuum port in the sidewall of the vacuum chamber is in fluid communication with a vacuum area at a distal end of the vacuum chamber.

15. The compensator of claim 10, further comprising a plurality of vacuum ports disposed radially around the sidewall of the vacuum chamber.
